# EUROPÄISCHE PATENTSCHRIFT

(11) **EP 3 069 608 B1**
(45) Veröffentlichungstag und Bekanntmachung des Hinweises auf die Patenterteilung: **13.12.2017**
(21) Anmeldenummer: 16161066.2
(22) Anmeldetag: 18.03.2016
(51) Int. Cl.: A01M 7/00

(54) **VORRICHTUNG ZUM AUSGLEICHEN VON GIER- UND/ODER WANKBEWEGUNGEN EINER FELDSPRITZE**
DEVICE FOR COMPENSATING FOR YAW AND/OR ROLL MOVEMENTS OF AN AGRICULTURAL SPRAYER
DISPOSITIF D'EQUILIBRAGE DES MOUVEMENTS DE ROULIS ET/OU DE LACET D'UN PULVERISATEUR

(30) Priorität: 19.03.2015 DE 102015204992
(43) Veröffentlichungstag der Anmeldung: 21.09.2016
(73) Patentinhaber: Hochschule für Technik und Wirtschaft Dresden, 01069 Dresden (DE)
(72) Erfinder: Wild, Karl, 01454 Ullersdorf (DE)
(74) Vertreter: Pfenning, Meinig & Partner mbB

(56) Entgegenhaltungen:
- WO-A1-2012/146255
- DE-A1-102011 108 480
- DE-U1-202013 011 983

## Beschreibung

Die Erfindung betrifft eine Vorrichtung zum Ausgleichen von Gier- und/oder Wankbewegungen einer Feldspritze.

Zur Erzielung und Sicherung hoher Erträge und Qualitäten im Pflanzenbau sind entsprechende Pflanzenschutz- und Düngemaßnahmen notwendig. Trotz der größer werdenden Bedeutung des integrierten Pflanzenschutzes hat der chemische Pflanzenschutz immer noch eine sehr große Bedeutung und wird es auch in Zukunft haben.

Im Ackerbau stellt die Feldspritze das wichtigste Gerät für den chemischen Pflanzenschutz dar. Mit ihr werden die verschiedensten Mittel, z.B. Herbizide, Fungizide, Insektizide, und auch Flüssigdünger ausgebracht. Dabei ist es von Bedeutung, dass eine gleichmäßige und definierte Verteilung des jeweiligen Mittels auf dem Feld erfolgt, d.h. es müssen Driften, hervorgerufen durch Wind, Thermik oder hohe Temperaturen vermieden werden. Außerdem muss das Gestänge mit den Spritzdüsen immer in einer bestimmten Höhe über der Applikationsebene, z.B. dem Boden, gehalten werden und es darf keine Störbewegungen, wie z.B. Schwingungen, ausführen.

Um eine höhere Flächen- und Arbeitsproduktivität zu erzielen, wurden in der Vergangenheit die Arbeitsbreiten der Feldspritze und die Fahrgeschwindigkeiten auf dem Feld erhöht. Dadurch kam es zu einer erheblichen Zunahme der Störbewegungen des Spritzgestänges, die zu einer ungleichen Verteilung der auszubringenden Pflanzenschutz- und/oder Düngemittel führte.

Die Bewegungen des Spritzgestänges, die zu den größten Abweichungen in der Verteilung von Pflanzenschutz- und/oder Düngemitteln führen können, sind Gierbewegungen. Sie bewirken, dass sich das Spritzgestänge auf der einen Seite der Spritze mit einer höheren Geschwindigkeit über Grund bewegt und auf der anderen Seite mit einer niedrigeren Geschwindigkeit. Das Spritzgestänge schwankt dabei zwischen Umkehrpunkten hin und her, so dass im Bereich der Umkehrpunkte mehr Pflanzenschutz- und/oder Düngemittel auf dem Boden auftrifft. Die dadurch hervorgerufenen Abweichungen in der aufgebrachten Menge von Pflanzenschutz- und/oder Düngemitteln können mehrere hundert Prozent betragen und sind daher im Hinblick auf den Pflanzenbau und den Umweltschutz nicht akzeptabel. Auch Wankbewegungen des Spritzgestänges können zu Abweichungen in der aufgebrachten Menge von Pflanzenschutz- und/oder Düngemitteln führen, insbesondere da durch die Wankbewegungen der gleichmäßige Abstand zu Applikationsebene nicht mehr gegeben ist. DE 20 2013 011 983 U1 beschreibt ein Spritzgestänge, bei dem Stellmotoren und/oder einstellbare Dämpfersysteme die Beweglichkeit der Bereiche eines Spritzgestänges zueinander oder zum Rahmen direkt oder mittelbar bewirken, unterstützen oder einschränken. Dabei ist eine Steuer- und Regeleinrichtung vorgesehen, die auf die Stellmotoren und/oder einstellbaren Dämpfersysteme einwirkt.

In DE 10 2007 045 846 A1 wird eine landwirtschaftliche Maschine und ein Verfahren zur Positionsbestimmung eines Anbaugerätes der landwirtschaftlichen Maschine beschrieben. Dazu werden Beschleunigungssensoren eingesetzt, die an der Landmaschine und an dem Anbaugerät der Landmaschine angeordnet sind. Mittels einer elektronischen Steuereinheit wird durch eine Relativmessung der Signale der Sensoren an der Landmaschine und der Sensoren am Anbaugerät die Position des Anbaugerätes bestimmt.

Es ist daher Aufgabe der Erfindung, eine Vorrichtung bereitzustellen, die Gier- und/oder Wankbewegungen des Gestänges einer Feldspritze ausgleichen kann, um so das gleichmäßige und definierte Ausbringen von Pflanzenschutz- und/oder Düngemitteln zu gewährleisten.

Erfindungsgemäß wird diese Aufgabe mit den Merkmalen des Anspruchs 1 gelöst. Vorteilhafte Ausgestaltungen und Weiterbildungen der Erfindung können mit in untergeordneten Ansprüchen bezeichneten Merkmalen realisiert werden.

Die erfindungsgemäße Vorrichtung besteht zunächst aus einer Feldspritze zum Ausbringen von flüssigen Pflanzenschutzmitteln und/oder Düngemitteln aus einem an und/oder in der Feldspritze ausgebildeten Vorratsbehälter. Die Verteilung der Pflanzenschutz- und/oder Düngemittel erfolgt mittels Pumpe über ein Spritzgestänge mit Ausbringdüsen. Dabei ist das Spritzgestänge beidseitig der Feldspritze senkrecht zur Fahrtrichtung ausgerichtet und die Feldspritze an eine Landmaschine angehängt, angebaut oder als selbstfahrende Feldspritze ausgebildet.

An der Feldspritze, bevorzugt am Spritzgestänge der Feldspritze, ist mindestens ein Beschleunigungssensor angebracht. Er erfasst die Bewegungen der Feldspritze und des Spritzgestänges in mindestens einer Achse. In einer besonders vorteilhaften Ausführungsvariante erfasst der Sensor die Bewegungen des Spritzgestänges in drei Achsen. In einer weiteren vorteilhaften Ausführungsvariante ist der/sind die Beschleunigungssensor/en zur Erfassung die Gier- und/oder Wankbewegungen an dem/den stirnseitigen Ende/n des Spritzgestänges angeordnet.

Bei Feldspritzen mit einem in zwei Teilgestänge geteiltem Spritzgestänge sollte an jedem Teilgestänge mindestens ein Beschleunigungssensor angeordnet sein, der die Bewegungen des Spritzgestänges in mindestens einer Achsrichtung erfasst.

Zur Bestimmung von Referenzwerten kann ein weiterer Beschleunigungssensor am oder zumindest nahe am Aufhängepunkt des Spritzgestänges an der Feldspritze angeordnet sein, wo keine oder nur sehr geringe Gier- und/oder Wankbewegungen auftreten. Dies kann in der mittleren Längsachse der Feldspritze sein.

Die Erfassung der Gier- und/oder Wankbewegungen durch den/die Beschleunigungssensor/en soll mit einer Frequenz im Kilohertzbereich, bevorzugt im Bereich 1 kHz bis 20 kHz, erfolgen.

Im Bereich der stirnseitigen Enden des Spritzgestänges sind erfindungsgemäß jeweils mindestens zwei Druckluftdüsen vorhanden oder befestigt, deren Austrittsöffnungen diametral in einer horizontalen oder vertikalen Achse am Spritzgestänge ausgerichtet sind. Diese Druckluftdüsen sind mit einer Einrichtung zum Erzeugen und Speichern von Druckluft verbunden. Außerdem sind zwischen dem Druckluftspeicher und den Druckluftdüsen Zuführungen mit Ventilen ausgebildet, die den jeweiligen Druckluftdüsen zugeordnet sind. Die Ventile können als Magnetventile ausgebildet sein.

Um auch Gier- und/oder Wankbewegungen auszugleichen, wenn das Spritzgestänge im Betrieb nur teilweise ausgebreitet ist, können im Bereich von mindestens einem stirnseitigen Ende des nur teilweise ausgebreiteten Spritzgestänges mindestens zwei weitere Druckluftdüsen vorhanden oder befestigt sein, deren Austrittsöffnungen diametral in einer horizontalen oder vertikalen Achse ausgerichtet sind.

Der Druckluftspeicher sollte aus Stabilitätsgründen nahe am Aufhängepunkt des Spritzgestänges an der Feldspritze angeordnet sein.

Die Befüllung des Druckluftspeichers kann über die Druckluftbremsanlage der die Feldspritze ziehenden Landmaschine oder der Druckluftbremsanlage der selbstfahrenden Feldspritze erfolgen. Es kann auch ein Verdichter einer Reifendruckregelanlage genutzt werden.

Der mindestens eine Beschleunigungssensor an der Feldspritze oder dem Spritzgestänge ist mit einer Elektronik verbunden, die zur Kompensation der Gier- und/oder Wankbewegungen, die der Beschleunigungssensor erfasst hat, die jeweiligen Ventile in den Zuführungen zu den Druckluftdüsen ansteuert. Aus den erfassten Gier- und/oder Wankbewegungen ermittelt die Elektronik den erforderlichen Ausgleichsimpuls und regelt den Ausstoß von Druckluft über die Druckluftdüsen. Durch den Ausstoß der Druckluft wird ein Rückstoß bewirkt, der entgegengesetzt zur jeweiligen Gier- und/oder Wankbewegung des Spritzgestänges wirkt. Um den Druckluftverbrauch zu begrenzen, kann dem Ausgleich von Gierbewegungen Vorrang vor dem Ausgleich der Wankbewegungen gegeben werden. Zudem kann durch einen Regelalgorithmus in der Elektronik ein Aufschaukeln des Spritzgestänges verhindert oder zumindest gemindert werden.

Die Berechnung der Ausgleichsimpulse soll mit einer hohen Frequenz im Kilohertzbereich erfolgen, damit eine ausreichende Schnelligkeit des Systems mit kleiner Zeitkonstante sichergestellt ist.

Die Elektronik kann dabei so ausgebildet sein, dass sie die Fahrtrichtung, Fahrgeschwindigkeit oder die Position der Feldspritze erfasst und so in Verbindung mit den erfassten Gier- und/oder Wankbewegungen den erforderlichen Ausgleichsimpuls gegen das Gieren und/oder Wanken ermittelt. So kann erreicht werden, dass Gier- und/oder Wankbewegungen, die aus dem gewünschten Streckenverlauf, wie beispielsweise einer Kurvenfahrt resultieren, nicht ausgeglichen werden. Die Erfassung der Fahrtrichtung, Fahrgeschwindigkeit oder die Position der Feldspritze kann über den GPS-Empfänger und/oder den Bordcomputer der die Feldspritze ziehenden Landmaschine oder der selbstfahrenden Feldspritze erfolgen.

Weiterhin kann die Elektronik so ausgebildet sein, dass vor Arbeitsbeginn die geplante Fahrstrecke der Feldspritze eingegeben werden kann und die Elektronik aus der geplanten Fahrstrecke und den erfassten Gier- und/oder Wankbewegungen den erforderlichen Ausgleichsimpuls gegen das Gieren und/oder Wanken ermittelt.

Bei Feldspritzen mit Tragluftunterstützung wird zum Ausbringen der Pflanzenschutz- und/oder Düngemittel zusätzlich Druckluft eingesetzt. Dabei wird Druckluft über eine Zuführung zu den Spritzdüsen geführt, wo sie das in Tröpfchen vorliegende Pflanzenschutz- und/oder Düngemittel erfasst und mit hoher Geschwindigkeit in den Bestand bläst. Erfindungsgemäß kann die Zuführung zu den Spritzdüsen so ausgebildet sein, dass an den stirnseitigen Enden des Spritzgestänges jeweils mindestens zwei Druckluftdüsen mit dieser Zuführung verbunden sind, deren Austrittsöffnungen diametral in einer horizontalen oder vertikalen Achse am Spritzgestänge ausgerichtet sind, und die Druckluftdüsen über Ventile in den Zuführungen einzeln ansteuerbar sind.

Durch die erfindungsgemäße Vorrichtung können Gier- und/oder Wankbewegungen des Spritzgestänges einer Feldspritze schnell, einfach und kostengünstig erfasst und ausgeglichen werden. Durch die Erfassung der Daten zu Fahrtrichtung, Fahrgeschwindigkeit und Position der Feldspritze sowie dem Einbezug der geplanten Fahrstrecke in die Ermittlung des Ausgleichsimpulses können Gier- und/oder Wankbewegungen schon frühzeitig erkannt und gegengesteuert werden.

Nachfolgend soll die Erfindung anhand eines Beispiels näher erläutert werden.

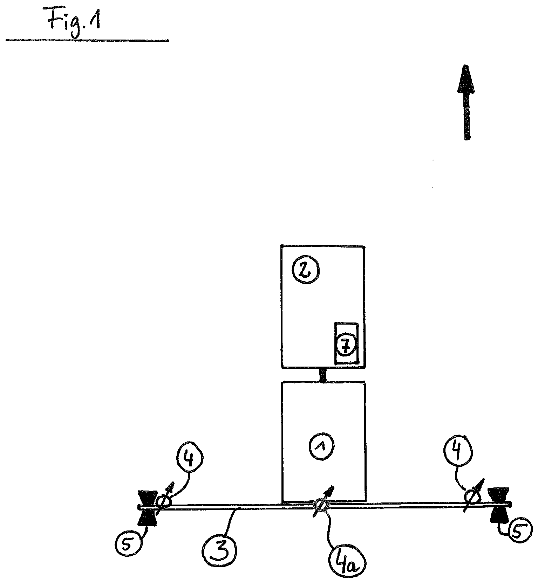

Dabei zeigt Figur 1 einen prinzipiellen Aufbau eines Beispiels einer erfindungsgemäßen Vorrichtung.

Eine Feldspritze 1 wird von einer Landmaschine 2 gezogen. In der Zeichnung wird die Fahrtrichtung der Landmaschine 1 mit der angehängten Feldspritze 2 mit einem Pfeil nach oben dargestellt. Am Spritzgestänge 3 der Feldspritze 1 sind Beschleunigungssensoren 4 und 4a angeordnet. Die Beschleunigungssensoren 4 sind an den stirnseitigen Enden des Spritzgestänges 3 angeordnet und erfassen die Bewegungen des Spritzgestänges 3 in drei Achsen. Am Aufhängepunkt des Spritzgestänges 3 an der Feldspritze 1 ist der Beschleunigungssensor 4a angeordnet, der die Bewegungen der Feldspritze 1 und des Spritzgestänges 3 in drei Achsen als Referenzwert zu den Werten der Beschleunigungssensoren 4 erfasst.

Ebenfalls an den stirnseitigen Enden des Spitzgestänges 3 sind jeweils vier Druckluftdüsen 5 vorhanden, wobei jeweils zwei Austrittsöffnungen der Druckluftdüsen diametral in vertikaler und zwei weitere diametral in horizontaler Richtung ausgerichtet sind. Die Beschleunigungssensoren 4 sind mit der Elektronik 7 in der Landmaschine 2 verbunden. Die Elektronik 7 kann die Ventile in den Zuführungen (nicht gezeigt) zu den Druckluftdüsen 5 einzeln ansteuern.

Während des Betriebes der Feldspritze 1 erfassen die Beschleunigungssensoren 4 und 4a die Bewegungen der Feldspritze 1 und des Spritzgestänges 3. Die Elektronik 7 ermittelt aus den erfassten Bewegungen und der zusätzlich per GPS erfassten Fahrgeschwindigkeit, Fahrtrichtung und Position der Feldspritze 3 sowie der vor Arbeitsbeginn eingegebenen geplanten Fahrstrecke den erforderlichen Ausgleichsimpuls.

Zum Ausgleich von Gier- und/oder Wankbewegungen wird zunächst die Druckluftdüse 5 aktiviert, an deren Position die Beschleunigung am größten ist und die entgegen der Beschleunigungsrichtung des Spritzgestänges 3 ausgerichtet ist. Gleichzeitig kann zum Ausgleich der Gier- und/oder Wankbewegungen auch die Druckluftdüse 5 am entgegengesetzten stirnseitigen Ende des Spritzgestänges 3 aktiviert werden, die entgegengesetzt ausgerichtet zur zuerst aktivierten Druckluftdüse 5 ist, wenn dies für den Ausgleich einer Gier- und/oder Wankbewegung des Spritzgestänges 3 förderlich ist.

## Patentansprüche

1. Vorrichtung zum Ausgleichen von Gier- und/oder Wankbewegungen einer Feldspritze (1), mit
einer Feldspritze (1) zum Ausbringen von flüssigen Pflanzenschutzmitteln und/oder Düngemitteln aus einem an und/oder in der Feldspritze (1) ausgebildeten Vorratsbehälter mittels Pumpe über ein Spritzgestänge (3) mit Ausbringdüsen, wobei das Spritzgestänge (3) beidseitig der Feldspritze (1) senkrecht zur Fahrtrichtung ausgerichtet ist und die Feldspritze (1) an eine Landmaschine (2) angehängt oder als selbstfahrende Feldspritze (1) ausgebildet ist,
und mindestens einem Beschleunigungssensor (4), der an der Feldspritze (1) und/oder am Spritzgestänge (3) angeordnet ist und Bewegungen in mindestens einer Achse erfasst, **dadurch gekennzeichnet, dass** im Bereich der stirnseitigen Enden des Spritzgestänges (3) jeweils mindestens zwei Druckluftdüsen (5), deren Austrittsöffnungen diametral in einer horizontalen oder vertikalen Achse am Spritzgestänge (3) vorhanden oder daran befestigt sind,
und die Druckluftdüsen (5) mit einer Einrichtung zum Erzeugen und Speichern von Druckluft (6) zur Versorgung der Druckluftdüsen (5) mit Druckluft verbunden sind,
sowie
in zwischen dem Druckluftspeicher (6) und den Druckluftdüsen (5) ausgebildeten Zuführungen jeweils Ventile vorhanden sind, die den Druckluftdüsen (5) zugeordnet sind
und
der mindestens eine Beschleunigungssensor (4) mit einer Elektronik (7) verbunden ist und die Elektronik (7) die jeweiligen Ventile zur Kompensation von mit dem mindestens einen Beschleunigungssensor (4) erfassten Gier- und/oder Wankbewegungen ansteuert.

2. Vorrichtung nach Anspruch 1, **dadurch gekennzeichnet, dass** ein Beschleunigungssensor (4a) zur Erfassung von Bewegungen in mindestens einer Achse zur Bestimmung von Referenzwerten am Aufhängepunkt des Spritzgestänges (3) an der Feldspritze (1) angeordnet ist, und an mindestens einem stirnseitigen Ende des Spritzgestänges (3) ein weiterer Beschleunigungssensor (4) zur Erfassung der Bewegungen in mindestens einer Achse angeordnet ist.

3. Vorrichtung nach einem der vorhergehenden Ansprüche, **dadurch gekennzeichnet, dass** bei Feldspritzen (1) mit in zwei Teilgestänge geteiltem Spritzgestänge (3) mindestens ein Beschleunigungssensor (4) an jedem Teilgestänge der Feldspritze (1) angeordnet ist und Bewegungen in mindestens einer Achse erfasst.

4. Vorrichtung nach einem der vorhergehenden Ansprüche, **dadurch gekennzeichnet, dass** die Befüllung der Druckluftspeicher (6) über die Druckluftbremsanlage der die Feldspritze (1) ziehenden Landmaschine (2), der Druckluftbremsanlage der selbstfahrenden Feldspritze (1) oder einen Verdichter insbesondere einer Reifendruckregelanlage erfolgt.

5. Vorrichtung nach einem der vorhergehenden Ansprüche, **dadurch gekennzeichnet, dass** die Elektronik (7) so ausgebildet ist, dass sie Fahrtrichtung, Fahrgeschwindigkeit oder Position der Feldspritze (1) erfasst und die Elektronik (7) daraus in Verbindung mit den erfassten Gier- und/oder Wankbewegungen den erforderlichen Ausgleichsimpuls gegen das Gieren und/oder Wanken ermittelt, so dass aus dem gewünschten Streckenverlauf resultierende Gier- und/oder Wankbewegungen nicht ausgeglichen werden.

6. Vorrichtung nach einem der vorhergehenden Ansprüche, **dadurch gekennzeichnet, dass** die Elektronik (7) so ausgebildet ist, dass die geplante Fahrstrecke der Feldspritze eingebbar ist und die Elektronik (7) daraus in Verbindung mit den erfassten Gier- und/oder Wankbewegungen den erforderlichen Ausgleichsimpuls gegen das Gieren und/oder Wanken ermittelt.

7. Vorrichtung nach einem der vorhergehenden Ansprüche, **dadurch gekennzeichnet, dass** zum Ausgleich von Gier- und/oder Wankbewegungen bei nur teilweise ausgebreitetem Spritzgestänge (3) im Bereich von mindestens einem stirnseitigen Ende des nur teilweise ausgebreiteten Spritzgestänges (3) mindestens zwei weitere Druckluftdüsen (5), deren Austrittsöffnungen diametral in einer horizontalen oder vertikalen Achse am Spritzgestänge (3) vorhanden oder daran befestigt sind.

## Claims

1. An apparatus for compensating yaw and/or roll movements of an agricultural sprayer (1), comprising
an agricultural sprayer (1) for applying liquid pesticides and/or fertilizers from a storage container formed at and/or in the agricultural sprayer (1) by means of a pump via a spray boom (3) having application nozzles, wherein the spray boom (3) is aligned perpendicular to the direction of travel at both sides of the agricultural sprayer (1) and the agricultural sprayer (1) is hitched to an agricultural machine (2) or is configured as a self-propelling agricultural sprayer (1);
and at least one accelerometer (4) that is arranged at the agricultural sprayer (1) and/or at the spray boom (3) and that detects movements in at least one axis,
**characterized in that**
a respective at least two compressed air nozzles (5) whose outlet openings are present at the spray boom (3) or are fastened thereto diametrically in a horizontal or vertical axis in the region of the front-face ends of the spray boom (3);
**in that** the compressed air nozzles (5) are connected to a device for generating and storing compressed air (6) for supplying the compressed air nozzles (5) with compressed air;
and
**in that** respective valves that are associated with the compressed air nozzles (5) are present in feeds formed between the compressed air store (6) and the compressed air nozzles (5);
and
**in that** the at least one accelerometer (4) is connected to electronics (7) and the electronics (7) control the respective valves to compensate yaw and/or roll movements detected by the at least one accelerometer (4).

2. An apparatus in accordance with claim 1, **characterized in that** an accelerometer (4) for detecting movements in at least one axis for determining reference values is arranged at the suspension point of the spray boom (3) at the agricultural sprayer (1); and **in that** a further accelerometer (4) for detecting the movements in at least one axis is arranged at at least one front-face end of the spray boom (3).

3. An apparatus in accordance with one of the preceding claims, **characterized in that** with agricultural sprayers (1) having a spray boom (3) divided into two part booms, at least one accelerometer (4) is arranged at each part boom of the agricultural sprayer (1) and detects movements in at least one axis.

4. An apparatus in accordance with one of the preceding claims, **characterized in that** the filling of the compressed air store (6) takes place via the compressed air braking system of the agricultural machine (2) pulling the agricultural sprayer (1), the compressed air braking system of the self-propelling agricultural sprayer (1) or a compressor, in particular of a tire pressure regulation system.

5. An apparatus in accordance with one of the preceding claims, **characterized in that** the electronics (7) are configured such that they detect the direction of travel, the travel speed or the position of the agricultural sprayer (1) and the electronics (7) determine therefrom, in conjunction with the detected yaw and/or roll movements, the required compensation pulse against the yaw and/or roll so that yaw and/or roll movements resulting from the desired routing are not compensated.

6. An apparatus in accordance with one of the preceding claims, **characterized in that** the electronics (7) are configured so that the planned travel path of the agricultural sprayer can be input and the electronics (7) determine therefrom, in conjunction with the detected yaw and/or roll movements, the required compensation pulse against the yaw and/or roll.

7. An apparatus in accordance with one of the preceding claims, **characterized in that**, to compensate yaw and/or roll movements with an only partly extended spray boom (3), at least two further compressed air nozzles (5) whose outlet openings are present at or fastened to the spray boom (3) diametrically in a horizontal or vertical axis in the region of at least one front-face end of the only partly extended spray boom (3).

## Revendications

1. Dispositif pour la compensation de mouvements de lacet et/ou de roulis d'un pulvérisateur agricole (1), avec
un pulvérisateur agricole (1) pour la distribution de produits phytosanitaires liquides et/ou d'engrais à partir d'un réservoir disposé sur et/ou dans le pulvérisateur agricole (1), au moyen d'une pompe par l'intermédiaire d'une rampe de pulvérisation (3) avec des buses de distribution, la rampe de pulvérisation (3) étant orienté des deux côtés du pulvérisateur agricole (1) perpendiculairement au sens de la marche et le pulvérisateur agricole (1) étant suspendu à une machine agricole (2) ou étant conçu comme un pulvérisateur agricole (1) automoteur,
et au moins un capteur d'accélération (4) qui est disposé sur le pulvérisateur agricole (1) et/ou sur la rampe de pulvérisation (3) et détecte les mouvements sur au moins un axe,
**caractérisé en ce que**
au niveau des extrémités frontales de la rampe de pulvérisation (3), se trouvent ou sont fixées à celle-ci au moins deux buses à air comprimé (5), dont les ouvertures de sortie sont disposées diamétralement sur un axe horizontal ou vertical sur la rampe de pulvérisation (3),
et les buses à air comprimé (5) sont reliées à un dispositif de production et de stockage d'air comprimé (6) pour l'alimentation des buses à air comprimé (5) en air comprimé,
et
dans les alimentations disposées entre le réservoir d'air comprimé (6) et les buses à air comprimé (5), sont disposées des vannes qui correspondent aux buses à air comprimé (5),
et
l'au moins un capteur d'accélération (4) est relié à une électronique (7) qui commande les vannes correspondantes pour la compensation des mouvements de lacet et/ou de roulis détectés par l'au moins un capteur d'accélération (4).

2. Dispositif selon la revendication 1, **caractérisé en ce qu'**un capteur d'accélération (4a) pour la détection de mouvements sur au moins un axe pour la détermination de valeurs de préférence, est disposé au niveau du point de suspension de la rampe de pulvérisation (3) sur le pulvérisateur agricole (1) et, sur au moins une extrémité frontale de la rampe de pulvérisation (3), est disposé un autre capteur d'accélération (4) pour la détection des mouvements sur au moins un axe.

3. Dispositif selon l'une des revendications précédentes, **caractérisé en ce que**, sur les pulvérisateurs agricoles (1) avec une rampe de pulvérisation (3) divisée en deux rampes partielles, est disposé au moins un capteur d'accélération (4) sur chaque rampe partielle du pulvérisateur agricole (1), qui détecte les mouvements sur au moins un axe.

4. Dispositif selon l'une des revendications précédentes, **caractérisé en ce que** le remplissage du stockage d'air comprimé (6) a lieu par l'intermédiaire de l'installation de freinage à air comprimé de la machine agricole (2) tractant le pulvérisateur agricole (1), de l'installation de freinage à air comprimé du pulvérisateur agricole (1) automoteur ou d'un compresseur, plus particulièrement d'une installation de réglage de la pression des pneus.

5. Dispositif selon l'une des revendications précédentes, **caractérisé en ce que** l'électronique (7) est conçue de façon à déterminer le sens du déplacement, la vitesse de déplacement ou la position du pulvérisateur agricole (1) et l'électronique (7) en déduit, en lien avec les mouvements de lacet et/ou de roulis détectés, l'impulsion de compensation nécessaire contre le lacet et/ou le roulis, de façon à ce que les mouvements de lacet et/ou de roulis résultant de la trajectoire souhaitée ne soient pas compensées.

6. Dispositif selon l'une des revendications précédentes, **caractérisé en ce que** l'électronique (7) est conçue de façon à pouvoir entrer la trajectoire prévue et l'électronique (7) en déduit, en lien avec les mouvements de lacet et/ou de roulis détectés, l'impulsion de compensation nécessaire contre le lacet et/ou le roulis.

7. Dispositif selon l'une des revendications précédentes, **caractérisé en ce que**, pour la compensation des mouvements de lacet et/ou de roulis lorsque la rampe de pulvérisation (3) n'est que partiellement déployée, au niveau d'au moins une extrémité frontale de la rampe de pulvérisation (3) seulement partiellement déployée, se trouvent ou sont fixées à celle-ci au moins deux autres buses air comprimé (5) dont les ouvertures de sortie sont disposées diamétralement sur un axe horizontal ou vertical sur la rampe de pulvérisation (3).
